# EUROPÄISCHE PATENTSCHRIFT

(11) **EP 4 275 995 B1**
(45) Veröffentlichungstag und Bekanntmachung des Hinweises auf die Patenterteilung: **29.05.2024**
(21) Anmeldenummer: 22172358.8
(22) Anmeldetag: 09.05.2022
(51) Int. Cl.: B62D 25/06, B62D 33/04, B60R 13/01, B60R 13/02

(54) **KRAFTFAHRZEUG-DACHKONSTRUKTION EINES NUTZFAHRZEUGS MIT MEHREREN DACH-QUERTRÄGERN UND EINER DACHVERKLEIDUNG SOWIE MONTAGEVERFAHREN**
VEHICLE ROOF CONSTRUCTION OF A COMMERCIAL VEHICLE WITH MULTIPLE ROOF CROSS-BEAMS AND A ROOF LINING AND METHOD OF ASSEMBLY
STRUCTURE DE TOIT D'UN VÉHICULE UTILITAIRE POURVU D'UNE PLURALITÉ DE SUPPORTS TRANSVERSAUX DE TOIT ET REVÊTEMENT DE TOIT, AINSI QUE PROCÉDÉ DE MONTAGE

(43) Veröffentlichungstag der Anmeldung: 15.11.2023
(73) Patentinhaber: Ambulanz Mobile GmbH & Co. KG, 39218 Schönebeck (DE)
(72) Erfinder: Schwarz, Hans-Jürgen, 39218 Schönebeck (DE)
(74) Vertreter: Freischem & Partner Patentanwälte mbB

(56) Entgegenhaltungen:
- EP-A2- 0 346 158
- DE-A1-102004 054 159
- DE-U1-202004 006 750

## Beschreibung

Die Erfindung betrifft eine Kraftfahrzeug-Dachkonstruktion eines Nutzfahrzeugs in Form eines Kastenwagens mit mehreren Dach-Querträgern und einer Dachverkleidung gemäß dem Oberbegriff von Anspruch 1 sowie ein Verfahren zur Montage einer solchen Kraftfahrzeug-Dachkonstruktion. Insbesondere betrifft die Erfindung Kastenwagen, welche von Fahrzeugherstellern mit Dachgestaltungen angeboten werden, die mehrere, sich über einen Großteil der Breite oder die gesamte Breite des Dachs erstreckende Dach-Querträger aufweisen. Solche Kraftfahrzeuge werden von Aufbauherstellern häufig als Basis für einen individualisierten Innenausbau verwendet, insbesondere um Spezialfahrzeuge in Form von Ambulanzfahrzeugen, Speditionsfahrzeugen, Handwerkerfahrzeugen oder in Form von sonstigen, mit einer speziellen Dachkonstruktion versehenen Fahrzeugen zu erstellen.

Aus der Praxis bekannte Nutzfahrzeuge in Form eines Kastenwagens weisen eine Blechkonstruktion mit einer Dach-Außenhaut und innenseitig angeordneten, die Dach-Außenhaut stützenden Dach-Querträgern in Form von ausgeformten Blechteilen auf. Die Dach-Querträger werden häufig auch Spriegel genannt.

Die Erfindung bezieht sich insbesondere auf Spezialfahrzeuge, die einen Spezial-Nutzraum aufweisen, der innerhalb des Kraftfahrzeuges in Fahrzeug-Längsrichtung betrachtet hinter einer Fahrerkabine angeordnet ist. Dieser Spezial-Nutzraum kann insbesondere vollständig von dem Raum einer Fahrerkabine abgetrennt sein. Bei einem Ambulanzfahrzeug beispielsweise kann es sich bei dem Spezial-Nutzraum um einen Transportraum für den sitzenden und/oder liegenden Transport von zu transportierenden Personen aufweisen.

Meist sind solche Ambulanzfahrzeuge mit Kennleuchten oder Warnleuchten versehen, mit welchen bedarfsweise im Straßenverkehr eine Vorrangstellung eingenommen werden kann. Insbesondere wird in Verbindung mit der Erfindung auf Ambulanzfahrzeuge in Form von Krankentransportwagen und Rettungstransportwagen verwiesen.

Bei den aus der Praxis bekannten Spezialfahrzeugen, insbesondere den vorstehend genannten Ambulanzfahrzeugen, wurden in der Vergangenheit die Dachkonstruktionen durch Verkleben von einem großflächigen Dach-Verkleidungselement oder durch das Verkleben mehrerer großflächiger Dach-Verkleidungselemente mit der Innenseite des Fahrzeugdachs, insbesondere mit den Dach-Querträgern, erstellt, um individuelle Dachverkleidung herzustellen. In den meisten Fällen wurde zunächst ein großes Dach-Verkleidungselement als separates Bauteil erstellt. Dieses wurde dann mit dem Fahrzeugdach verklebt. In einem solchen, aus dem Stand der Technik bekannten Dach-Verkleidungselement sind häufig kleinere Öffnungen für Lampen, Luftaustrittskanäle und/oder Halteelemente (beispielsweise Infusionshalter) vorgesehen. Zwischen der Dach-Außenhaut und dem mindestens einen Dach-Verkleidungselement können insbesondere Luftkanäle, Kabel, Zugang zu am Dach montierten Antennen und Dämmelemente angeordnet werden.

Die aus einem Dach-Verkleidungselement oder mehreren Dach-Verkleidungselementen gebildete Dachverkleidung ist vorzugsweise glattflächig gestaltet und bietet für die Insassen, insbesondere die Insassen eines Ambulanzfahrzeuges, ein anderes Fahrgefühl als Kraftfahrzeuge mit Blechkonstruktionen ohne entsprechende Dachverkleidung. Ferner kann die Dachverkleidung, insbesondere wenn sie weitestgehend oder vollständig glattflächig gestaltet ist, einfach und gründlich desinfiziert und gereinigt werden.

Das Verkleben des einen Dach-Verkleidungselements oder mehrerer Dach-Verkleidungselemente mit dem Fahrzeugdach hat den Nachteil, dass das Aushärten des Klebstoffs abgewartet werden muss, bis weitere Arbeiten an dem einen Dach-Verkleidungselement oder den mehreren Dach-Verkleidungselementen durchgeführt werden können. Darüber hinaus ist die Tragfähigkeit der Dach-Verkleidungselemente auf die Tragfähigkeit des Klebstoffs beschränkt. Dieser Thematik kann zwar durch eine großflächige Verklebung und/oder durch die Verwendung von hochfesten Klebstoffen begegnet werden. Allerdings hat das Verkleben den weiteren Nachteil, dass die Innenseite des Fahrzeugdachs nach dem Verkleben mit dem einen Dach-Verkleidungselement und oder den mehreren Dach-Verkleidungselementen nicht mehr zerstörungsfrei großflächig zugänglich ist. Dies kann zu hohem Wartungs- und Reparaturaufwand führen bzw. beschränkt die Zugänglichkeit auf Bereiche, in welchen Reparatur- und Wartungsöffnungen angeordnet sind.

Aus DE 20 2004 006 750 U1 ist ein Verdeckhimmel für ein Stoffverdeck für Cabrios bekannt. Dieses Dokument weist keinen Bezug zu Nutzfahrzeugen auf.

Aus DE 10 2004 054 159 A1 ist ein Dachmodul für ein Kraftfahrzeug in Form eines Nutzfahrzeugs in Form eines Kastenwagens bekannt, das eine im Wesentlichen flächige Außenhaut aus Kunststoff und zumindest einen Dachspriegel aus Metall aufweist, welcher die Außenhaut trägt. Insoweit sind in diesem Dokument die Merkmale des Oberbegriffs von Anspruch 1 offenbart.

Der Erfindung liegt die Aufgabe zugrunde, eine Kraftfahrzeug-Dachkonstruktion eines Nutzfahrzeugs in Form eines Kastenwagens mit mehreren Dach-Querträgern und einer Dachverkleidung sowie ein Montageverfahren hierfür zur Verfügung zu stellen, mit welchen die vorstehend genannten Nachteile vermieden werden.

Die Lösung der Aufgabe erfolgt erfindungsgemäß mit den Merkmalen der unabhängigen Ansprüche. Weitere praktische Ausführungsformen und Vorteile der Erfindung sind in Verbindung mit den abhängigen Ansprüchen beschrieben.

Eine erfindungsgemäße Kraftfahrzeug-Dachkonstruktion eines Nutzfahrzeugs in Form eines Kastenwagens weist Dach-Querträger und eine diese Dach-Querträger unterseitig abdeckende Dachverkleidung mit mindestens einem Dach-Verkleidungselement auf. Darüber hinaus ist ein Leiterrahmen vorgesehen, der aus mindestens zwei Leiterrahmen-Längsträgern und mindestens zwei Leiterrahmen-Querträgern gebildet ist. Dieser Leiterrahmen ist an den Dach-Querträgern befestigt. Ferner ist das mindestens einer Dach-Verkleidungselement lösbar an dem Leiterrahmen befestigt. Die Dach-Querträger sind insbesondere an einer Kraftfahrzeugkarosserie befestigt. Es wird insoweit auch auf ein Kraftfahrzeug mit einer wie vorstehend und nachfolgend noch im Detail beschriebenen Kraftfahrzeug-Dachkonstruktion verwiesen. Unter der vorstehend beschriebenen lösbaren Befestigung ist insbesondere ein zerstörungsfreies Lösen zu verstehen. Ein derartiges Lösen ermöglicht es, das mindestens eine Dach-Verkleidungselement bedarfsweise zerstörungsfrei zu entfernen und wieder zu montieren. Dies schafft insbesondere die Möglichkeit, ein oder mehrere derart lösbare Dach-Verkleidungselemente vorzusehen. Dadurch kann der Bereich oberhalb eines entsprechenden Dach-Verkleidungselements bedarfsweise zugänglich gemacht werden, beispielsweise wenn eine Deformierung im Bereich des Daches aufgrund eines Unfalls behoben werden soll oder weil ein unmittelbar mit dem Dach verbundenes Element, wie beispielsweise eine Lüftungseinheit oder Klimatisierungseinheit, im Bereich des innenseitigen Daches eines Kraftfahrzeuges zugänglich gemacht werden muss. Ferner kann durch die geeignete Anordnung von lösbar befestigten Dach-Verkleidungselementen ein großvolumiger Nutzraum zwischen dem jeweiligen Dach-Verkleidungselement und dem darüber angeordneten Dach mit den Dach-Querträgern kreiert werden, der auch nachträglich an den jeweiligen Nutzungsbedarf flexibel anpassbar ist.

Bei der erfindungsgemäßen Kraftfahrzeugdachkonstruktion ist mindestens ein Dach-Querträger innenseitig einer Dach-Außenhaut angeordnet und mindestens einer der Leiterrahmen-Querträger komplementär zu mindestens einem der mindestens zwei Dach-Querträger ausgebildet. Dadurch ist das System aus Leiterrahmen und Kraftfahrzeugdach mit den daran befestigten Dach-Querträgern optimal aufeinander abgestimmt, wodurch sich eine dauerhaft sichere Verbindung zwischen Leiterrahmen und Dach ergibt. Eine derartige Verbindung ermöglicht es, hohe Lasten im Dachbereich aufzunehmen und erhöht damit die Nutzbarkeit eines Kraftfahrzeuges mit einer erfindungsgemäßen Kraftfahrzeugdachkonstruktion.

In einer praktischen Ausführungsform einer erfindungsgemäßen Kraftfahrzeugdachkonstruktion ist an mindestens einem der Leiterrahmen-Längsträger und/oder mindestens einem der Leiterrahmen-Querträger ein Haltemittel für das mindestens eine lösbar befestigte Dach-Verkleidungselement angeordnet oder ausgebildet. Auf diese Art und Weise kann die Anzahl der erforderlichen Elemente zur Realisierung einer erfindungsgemäßen Kraftfahrzeugdachkonstruktion gering gehalten werden.

Als Haltemittel für das mindestens eine lösbar befestigte Dach-Verkleidungselement kann insbesondere an zwei gegenüberliegenden Leiterrahmen-Längsträgern und/oder an zwei gegenüberliegenden Leiterrahmen-Querträgern an jeweils eine Einstecknut zum Einstecken eines komplementär ausgebildeten Dach-Verkleidungselements ausgebildet oder angeordnet sein. In diesem Zusammenhang wird insbesondere auf im Querschnitt c-förmig ausgebildete Einstecknuten verwiesen, welche vollständig komplementär ausgebildet sind zu einer seitlichen Kante einer flachen Platte, die als Dach-Verkleidungselement dient. Unter einem Dach-Verkleidungselement werden insbesondere Platten verstanden, die im Vergleich zur Länge und zur Breite eine nur geringe Dicke aufweisen, insbesondere eine Dicke von maximal 10 %, vorzugsweise maximal 5 % der kleineren der beiden Dimensionen Länge und Breite. Als Dach-Verkleidungselemente sind jedoch auch komplex gestaltete Geometrien geeignet, deren äußerer Rand in dem Bereich plattenartig ausgestaltet ist, der mit einer Einstecknut zusammenwirken soll.

In einer weiteren praktischen Ausführungsform einer erfindungsgemäßen Kraftfahrzeugdachkonstruktion sind zwei Einstecknuten an sich gegenüberliegenden Seiten von zwei der Leiterrahmen-Längsträger oder zwei der Leiterrahmen-Querträger ausgebildet, wobei in diesen Einstecknuten sich gegenüberliegende Stoßkanten eines biegeelastisch ausgebildeten Dach-Verkleidungselements aufgenommen sind. Eine solche Ausgestaltung ermöglicht es, eine Kraftfahrzeug-Dachkonstruktion so auszulegen, dass sich das mit den genannten Einstecknuten zusammenwirkende Dach-Verkleidungselement werkzeugfrei und ohne zusätzliche bewegliche Elemente an dem Leiterrahmen montieren und demontieren lässt, indem die Biegeelastizität des Dach-Verkleidungselements genutzt wird, um es zur Montage in den Bereich zwischen die Einstecknuten zu verbringen und dann durch Einführen der gegenüberliegenden Stoßkanten in die Einstecknuten und Rückverformung formschlüssig gegenüber den Längsträgern zu fixieren.

In einer weiteren praktischen Ausführungsform der erfindungsgemäßen Kraftfahrzeugdachkonstruktion erstreckt sich das mindestens eine Dach-Verkleidungselement über einen Großteil der Länge und/oder über einen Großteil der Breite des Leiterrahmens. Der Leiterrahmen erstreckt sich vorzugsweise über die gesamte Dachfläche eines Spezial-Nutzraums eines Spezialfahrzeuges, insbesondere über die Dachfläche eines Transportraumes eines Ambulanzfahrzeuges. Vorzugsweise weist das mindestens eine Dach-Verkleidungselement eine Länge und eine Breite auf, die jeweils größer als 1 m sind. Insbesondere erstrecken sich die Länge und/oder die Breite über jeweils mindestens 1,5 m, mindestens 2 m, mindestens 2,5 m oder auch mindestens 3 m, wobei Maße über 1,5 m insbesondere als Längenmaße auftreten. So können Flächen von einem Quadratmeter oder mehreren Quadratmetern im Bereich des Fahrzeugdachs eines Kraftfahrzeuges durch Abnehmen nur eines Dach-Verkleidungselements zugänglich gemacht werden.

Wenn an dem mindestens einen Dach-Verkleidungselement mindestens ein Haltemittel angeordnet ist, welches in Endmontagelage mit einem an einem Dach-Querträger und oder an einem Leiterrahmen-Querträger und oder an einem Leiterrahmen-Längsträger befestigten, komplementär dazu ausgebildeten Haltemittel zusammenwirkend angeordnet ist, kann der Abstand der Leiterrahmen-Längsträger oder Leiterrahmen-Querträger mit den daran ausgebildeten Einstecknuten sehr groß gewählt werden. In diesem Zusammenhang bietet es sich insbesondere an, ein oder mehrere Haltemittel auf der in einem Kraftfahrzeug nach oben weisenden Fläche eines Dach-Verkleidungselements anzuordnen, so dass das Haltemittel im montierten Zustand des Dach-Verkleidungselements vom Innenraum aus nicht sichtbar ist. Das komplementär dazu ausgebildete Haltemittel kann dann insbesondere fahrzeugfest angeordnet sein, beispielsweise an einem fest mit der Innenseite der Dach-Außenhaut verbundenen Element. Aufgrund des geringen Eigengewichts und der hohen gewichtsspezifischen Haltekraft eignen sich als Haltemittel zwischen Dach-Verkleidungselement und einem fahrzeugfesten Element insbesondere Klettelemente, die in Endmontagelage aneinander anhaften.

In einer weiteren praktischen Ausführungsform einer erfindungsgemäßen Kraftfahrzeugdachkonstruktion ist mindestens einer der Leiterrahmen-Querträger mittels eines mechanischen Verbindungsmittels mit mindestens einem der Dach-Querträger verbunden. In diesem Zusammenhang wird insbesondere auf die Verwendung von Schraub- und/oder Nietverbindungen verwiesen. Wenn derartige mechanische Verbindungsmittel zur Verwendung von einem Leiterrahmen-Querträger oder mehreren Leiterrahmen-Querträgern mit entsprechenden Dach-Querträgern vorgesehen sind, kann über derartige Verbindungsmittel eine dauerhafte Verbindung zwischen Leiterrahmen-Querträgern und Dach-Querträgern hergestellt werden. Ferner ist es möglich, derartige mechanische Verbindungsmittel zusätzlich zu einer Klebeverbindung zwischen dem Leiterrahmen-Querträger und einem Dach-Querträger vorzusehen. In diesem Fall kann durch die mechanischen Verbindungsmittel ein Anpressen - auch schon während des Aushärtens eines Klebstoffs - bewirkt werden. Auf die Anordnung von Stützen und das Abwarten einer Aushärtezeit des Klebstoffs kann in diesem Fall bei der Herstellung der Kraftfahrzeugdachkonstruktion verzichtet werden, wodurch Montagezeit gegenüber aus dem Stand der Technik bekannten ausschließlich verklebten Kraftfahrzeugdachkonstruktionen eingespart wird.

Die Erfindung eignet sich insbesondere zur Realisierung an Kraftfahrzeugen, bei welchen mindestens einer der Dach-Querträger eine polygonförmige, runde oder bogenförmige Querschnittsform aufweist und/oder einen polygonförmigen, kreisförmigen oder halbkreisförmigen Hohlraum aufweist. Die genannten Querschnittsgeometrien ermöglichen es, eine Kraftfahrzeugdachkonstruktion nicht nur mit relativ geringem Gewicht mit einer ausreichenden Biegesteifigkeit im Bereich des Fahrzeugdaches zu versehen, sondern sind auch sehr gut dazu geeignet, die Dach-Querträger für hohe Zuglasten in Form des Leiterrahmens und daran befestigten Elementen zu nutzen, insbesondere Dach-Verkleidungselemente und weitere funktionale Elemente wie Ablagefächer, Haltegriffe, Fächer für technische Geräte und weitere Elemente. Besonders geeignete polygonförmige Querschnittsformen sind insbesondere rechteckige und trapezförmige Querschnitte. Unter runden Querschnittsformen werden insbesondere ovale oder kreisförmige Querschnittsformen verstanden.

In einer weiteren praktischen Ausführungsform einer erfindungsgemäßen Kraftfahrzeugdachkonstruktion sind in dem Dach-Querträger und/oder in dem Leiterrahmen-Querträger miteinander fluchtende Öffnungen zur Anordnung von Haltemitteln ausgebildet, insbesondere zur Anordnung von Schraubverbindungen oder Nietverbindungen. Dies ermöglicht es, die Verbindung zwischen Leiterrahmen-Querträger und Dach-Querträger einfach auf kostengünstig miteinander zu verbinden und, sofern die Verbindung ausschließlich über entsprechende Haltemittel erfolgt, insbesondere über Schraubverbindungen, die Verbindung auch wieder lösen zu können, um Wartungs-, oder Reparaturarbeiten durchführen zu können, welche eine entsprechende Demontage erfordern.

In einer weiteren praktischen Ausführungsform einer erfindungsgemäßen Kraftfahrzeugdachkonstruktion ist mindestens einer der Leiterrahmen-Längsträger als Profilstruktur ausgebildet und fest mit den mindestens zwei Leiterrahmen-Querträgern verbunden. Unter einer Profilstruktur wird in diesem Zusammenhang insbesondere ein Extrusionsprofil verstanden, beispielsweise ein durch Strangpressen oder durch Pultrusion erzeugtes Extrusionsprofil. Derartige Profilstrukturen können insbesondere aus Aluminium oder aus Kunststoff hergestellt werden, wobei sich für die Herstellung von Pultrusionsprofilen insbesondere faserverstärkte Kunststoffe eignen. Für die Herstellung als Strangpressprofile ist Aluminium als Werkstoff besonders geeignet.

Weitere praktische Vorteile ergeben sich, wenn bei einer erfindungsgemäßen Dachkonstruktion mindestens einer der Leiterrahmen-Längsträger mindestens eine Profilnut zum Zusammenwirken mit einem Nutenstein, mindestens eine Leuchtmittelvertiefung und/oder mindestens ein Leuchtmittelabdeckungs-Befestigungselement aufweist. In diesem Zusammenhang wird insbesondere auf Profilstrukturen verwiesen, welche im Querschnitt geschlossene oder einseitig offene Hohlräume aufweisen, die für die vorstehend genannten Zwecke ausgestaltet sind.

Für die Montage von Dach-Verkleidungselementen, insbesondere mittleren Dach-Verkleidungselementen, die seitlich gegenüber Leiterrahmen-Längsträgern von jeweils einer Einstecknut aufgenommen sind, es ist vorteilhaft, wenn mindestens einer der Leiterrahmen-Längsträger als Haltemittel einer Einstecknut mit bogenförmiger Ausnehmung zur Aufnahme eines mittleren Dach-Verkleidungselements aufweist. Die bogenförmige Ausnehmung ist insbesondere so gestaltet, dass sich eine Seitenkante, welche im in der Einstecknut montierten Zustand von der Einstecknut aufgenommen ist, sich innerhalb der Einstecknut nach oben frei bewegen kann, um das Dach-Verkleidungselement durch Biegen im - in Fahrzeugquerrichtung betrachtet -mittleren Bereich nach unten in Richtung der Schwerkraft frei innerhalb der Einstecknut nach bewegen lässt, um die Entnahme und das Einsetzen in die Einstecknut zu erleichtern.

Die Erfindung betrifft auch ein Montageverfahren zur lösbaren Befestigung eines Dach-Verkleidungselements an einer wie vorstehend beschriebenen Kraftfahrzeugdachkonstruktion. Gemäß dem Montageverfahren ist das Dach-Verkleidungselement in den Bereich zwischen zwei an dem mindestens zwei Längsträgern ausgebildete Einstecknuten gebracht und wird anschließend durch Relativbewegung zwischen Dach, Verkleidungselement und Längsträgern in einer Endmontagelage fixiert. Die Relativbewegung zwischen Dach-Verkleidungselement und Längsträgern kann insbesondere dadurch erfolgen, dass die Längsträger zueinander in Fahrzeug-Querrichtung verschiebbar ausgebildet sind oder eine sonstige Bewegungsmöglichkeit zur Realisierung der Relativbewegung vorgesehen ist.

In einer bevorzugten und besonders einfachen Ausführungsform des erfindungsgemäßen Montageverfahrens wird das Dach-Verkleidungselement während der Montage derart biegeelastisch verformt, dass das Dach-Verkleidungselement bei starr zueinander fixierten Längsträgern in den Bereich zwischen diese verbracht, in dieser Position durch Rückverformung in die Einstecknuten eintauchen und mit Hilfe der Einstecknuten relativ gegenüber diesen fixiert werden kann. Auf die damit verbundenen Vorteile, welche vorstehend bereits in Verbindung mit der erfindungsgemäßen Kraftfahrzeugdachkonstruktion beschrieben wurden, wird hiermit noch einmal verwiesen.

Weitere praktische Ausführungsformen und Vorteile der Erfindung sind nachfolgend im Zusammenhang mit den Zeichnungen beschrieben. Es zeigen:
- Fig. 1: ein Kraftfahrzeug in Form eines Kastenwagens mit seitlicher Schiebetür in einer Ansicht von schräg vorne,
- Fig. 2: das Kraftfahrzeug aus Figur 1, bei welchem im Transportbereich die rechte Seitenwand, die Rückwand und die Dachverkleidung entfernt ist, in einer Ansicht von schräg hinten,
- Fig. 3: einen Leiterrahmen, der aus zwei Leiterrahmen-Längsträgern und vier Leiterrahmen-Querträgern gebildet ist, in einer Ansicht von schräg unten und von der Seite,
- Fig. 4: den Leiterrahmen aus Figur 3, montiert an vier komplementär zu den Leiterrahmen-Querträgern ausgebildeten Dach-Querträgern einer Dach-Außenhaut, die in dieser Figur ohne das restliche Kraftfahrzeug dargestellt ist,
- Fig. 5: eine Längs-Schnittdarstellung durch einen der Dach-Querträger mit daran befestigtem Leiterrahmen-Querträger,
- Fig. 6: eine Quer-Schnittdarstellung durch einen der beiden Leiterrahmen-Längsträger,
- Fig. 7: eine Quer-Schnittdarstellung durch die beiden LeiterrahmenLängsträger im an der Dach-Außenhaut montierten Zustand mit montiertem Dach-Verkleidungselement,
- Fig. 8: eine vergrößerte Darstellung des in Figur 7 mit VIII markierten Bereichs,
- Fig. 9: eine Ansicht analog zu Figur 8 mit einer anderen Nutzungsvariante des Leiterrahmen-Längsträgers und mit montiertem Dach-Verkleidungselement,
- Fig. 10: eine Ansicht analog zu Figur 9 mit Darstellung des Dach-Verkleidungselements während der Montage,
- Fig. 11: eine Ansicht analog zu Figur 7 mit exemplarischer Darstellung der Montage des Dach-Verkleidungselements und
- Fig. 12: eine Ansicht analog zu Figur 2 mit montiertem Leiterrahmen und mit montierten Dach-Verkleidungselement.

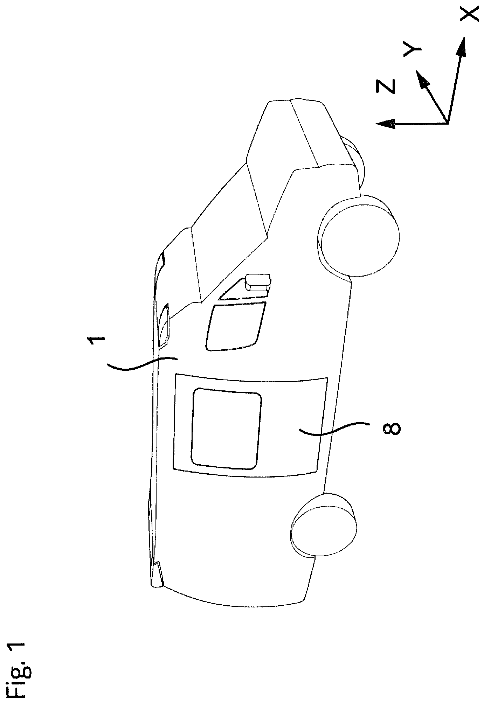

Figur 1 zeigt ein Kraftfahrzeug 1 in Form eines Kastenwagens mit einer seitlich angeordneten Schiebetür 8. In Figur 1 sowie in allen folgenden Figuren ist mit X die Fahrzeug-Längsrichtung (X-Richtung) nach vorne, mit Y die Fahrzeug-Querrichtung (Y-Richtung) und mit Z die Fahrzeug-Hochrichtung (Z-Richtung) nach oben gekennzeichnet. Über die Schiebetür 8 und/oder alternativ bzw. in Ergänzung dazu über eine nicht in den Figuren dargestellte Hecktür ist ein Transportraum 9 des Kraftfahrzeuges 1 zugänglich.

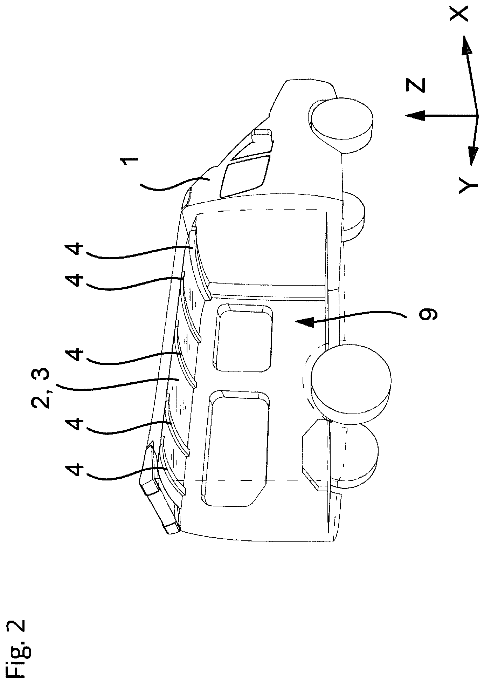

Figur 2 zeigt das Kraftfahrzeug 1 aus Figur 1 mit entfernter rechter Seitenwand und Rückwand, wodurch der Transportraum 9 einsehbar ist.

Figur 2 zeigt den Zustand des Kraftfahrzeuges im Bereich des Fahrzeugdachs 2 vor der Installation einer erfindungsgemäßen Kraftfahrzeug-Dachkonstruktion. Das Fahrzeugdach 2 ist gebildet durch eine Dach-Außenhaut 3 und mehrere Dach-Querträger 4, welche auch Spriegel genannt werden. Wie aus Figur 2 ersichtlich ist, erstrecken sich die Dach-Querträger über einen Großteil der Breite - hier: über die vollständige Breite - des Transportraums 9. In dem gezeigten Ausführungsbeispiel weisen die Dach-Querträger 4 jeweils eine leicht bogenförmige, nach oben gewölbte Form auf und sind alle parallel zueinander angeordnet.

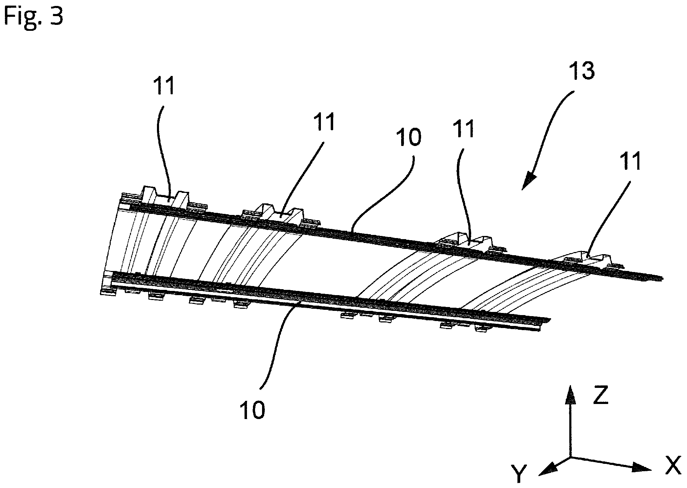

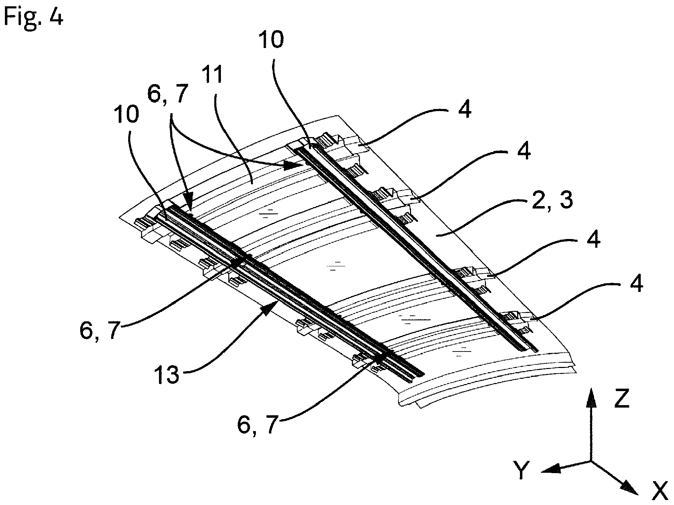

Die Figuren 3 und 4 zeigen einen Leiterrahmen 13. Dieser Leiterrahmen 13 ist gebildet aus zwei Leiterrahmen-Längsträgern 10, welche fest verbunden sind mit vier senkrecht zu den Leiterrahmen-Längsträgern 10 angeordneten Leiterrahmen-Querträgern 11.

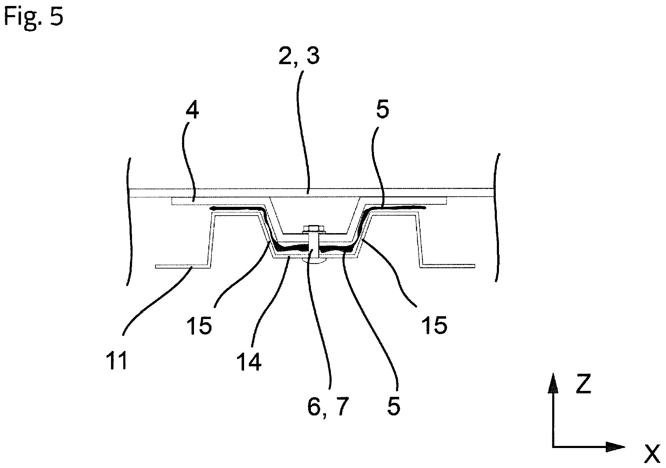

In Figur 4 ist zusätzlich zu dem Leiterrahmen 13 noch das Fahrzeugdach 2 mit Dach-Außenhaut 3 und vier Dach-Querträgern 4 ohne das übrige Kraftfahrzeug dargestellt. Dabei sind der Leiterrahmen 13 und das Fahrzeugdach relativ zueinander so angeordnet, wie diese zur Realisierung einer erfindungsgemäßen Kraftfahrzeug-Dachkonstruktion positioniert sein sollen. Zur Herstellung einer Verbindung zwischen Leiterrahmen 13 und Fahrzeugdach 2 sind jeweils im Verbindungsbereich zwischen den Leiterrahmen Querträgern 11 und den Dach-Querträgern 4 Haltemittel 6 vorgesehen, insbesondere eine Schraubverbindung 7, wie sie in Figur 5 an einem Beispiel im Detail dargestellt ist.

Figur 5 zeigt eine Längs-Schnittdarstellung durch einen der Dach-Querträger 4 mit einem daran befestigten Leiterrahmen-Querträger 11. Wie in Figur 5 gut erkennbar ist, weist der Dach-Querträger 4 einen Querschnitt auf, welcher als Hohlprofil mit einem trapezförmigem Grundkörper gebildet ist.

Komplementär zu der nach unten in Richtung Transportraum 9 weisenden Kontur des Dach-Querträgers 4 ist die zum Fahrzeugdach 2 weisende Kontur des Leiterrahmen-Querträgers 11 ausgebildet. Der Leiterrahmen-Querträger 11 ist in der gezeigten Ausführungsform im Querschnitt M-förmig ausgebildet, wobei ein Mittelabschnitt 14 des Profils sowie zwei sich jeweils außenseitig anschließende Nachbarabschnitte 15 den Dach-Querträger 4 umklammert angeordnet sind. In dem Dach-Querträger 4 und in dem Mittelabschnitt 14 des Leiterrahmen-Querträgers 11 sind miteinander fluchtende Öffnungen zur Realisierung der Schraubverbindung 7 ausgebildet.

In der gezeigten Ausführungsform ist es vorgesehen, die Verbindung zwischen den Dachträgern 4 und den Leiterrahmen-Querträgern 11 zusätzlich durch einen Klebstoff 5 herzustellen, welcher zwischen Dach-Querträger 4 und Leiterrahmen-Querträger 11 angeordnet ist (vgl. Figur 5).

Aufgrund der zusätzlichen Schraubverbindung 7 ist sichergestellt, dass während des Aushärtevorgangs des Klebstoffs 5 die Leiterrahmen-Querträger 11 in der in Figur 5 gezeigten Sollposition relativ gegenüber den Dach-Querträgern 4 gehalten werden. Dazu sind über die sich in Fahrzeug-Querrichtung (Y-Richtung) des Kraftfahrzeugs 1 erstreckende Länge der Dach-Querträger 4 und der Leiterrahmen-Querträger 11 mehrere Schraubverbindungen 7 vorgesehen.

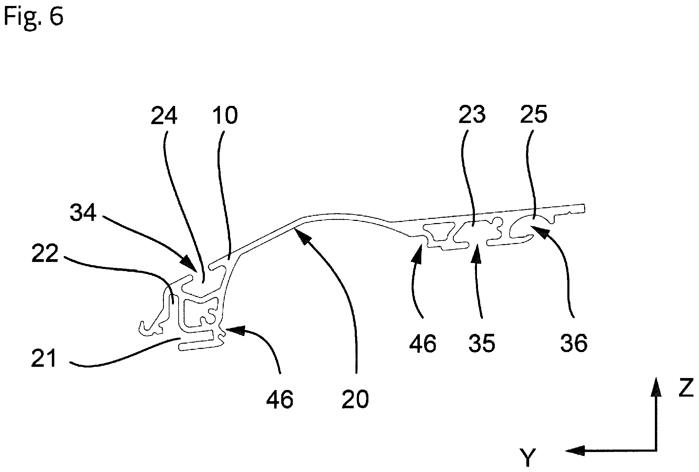

Figur 6 zeigt eine bevorzugte Ausführungsform einer Quer-Schnittdarstellung durch einen der beiden Leiterrahmen-Längsträger 10. Wie in Figur 6 gut erkennbar ist, sind an dem Leiterrahmen-Längsträger 10 eine Vielzahl von Geometrien ausgebildet, welche die Funktionalität des Leiterrahmen-Längsträgers 10 erhöhen.

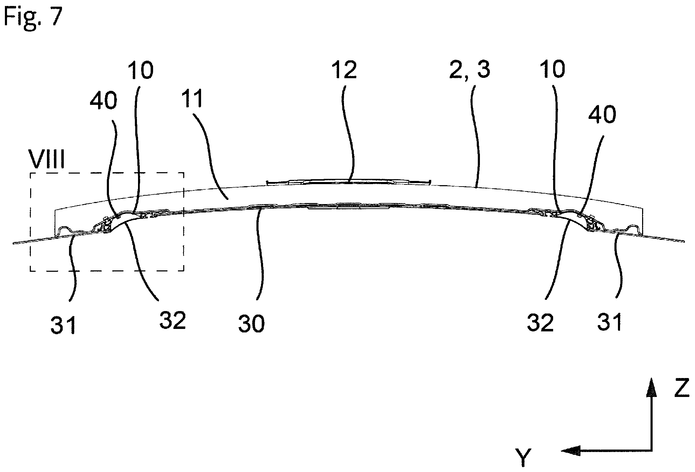

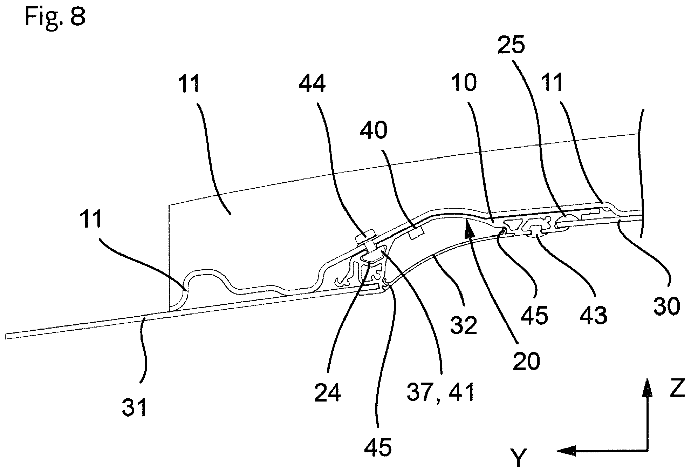

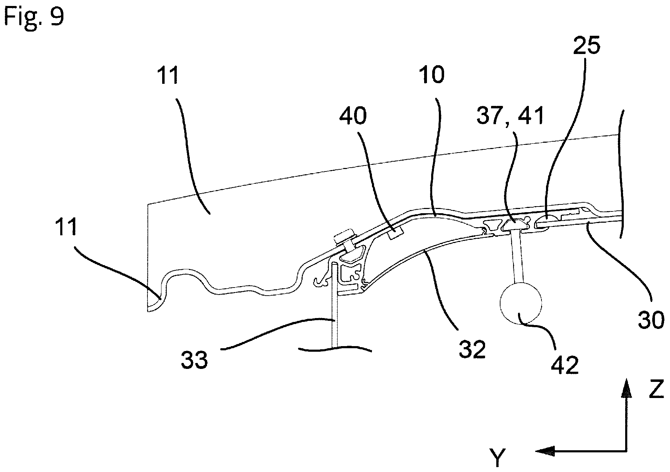

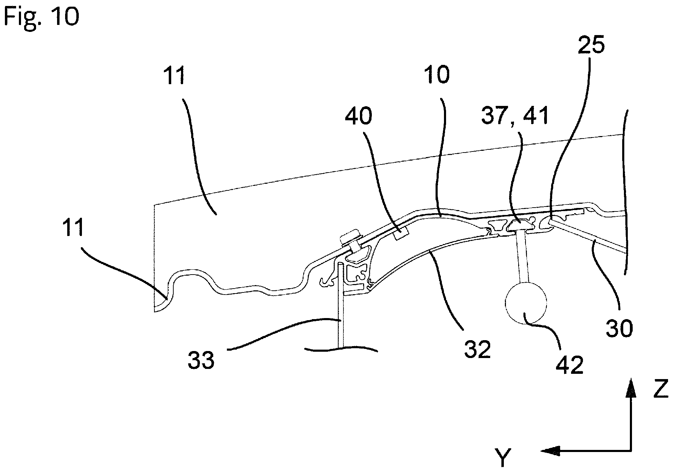

Im mittleren Bereich ist ein Reflektortrichter 20 vorgesehen, dessen Funktion nachfolgend noch in Verbindung mit den Figuren 7 bis 11 beschrieben wird. Links von dem Reflektortrichter 20 sind außenseitig zwei U-förmige Einstecknuten 21,22 für die Aufnahme von nicht dargestellten Verkleidungselementen vorgesehen. Dabei ist die Einstecknut 21 für das Einschieben eines äußeren Dach-Verkleidungselements 31 vorgesehen, wie in den Figuren 7 und 8 dargestellt. Alternativ kann die Einstecknut 22 für das Einsetzen eines Wand-Verkleidungselements 33 verwendet werden, wie es in den Figuren 9 und 10 dargestellt ist.

Zwischen den Einstecknuten 21, 22 und dem Reflektortrichter 20 ist eine Profilnut mit trapezförmiger Grundform und einer nach oben weisenden Öffnung 34 vorgesehen.

Rechts von dem Reflektortrichter 20 ist eine weitere Profilnut 23 mit einer in Fahrzeug-Hochrichtung nach unten weisenden Öffnung 35 vorgesehen.

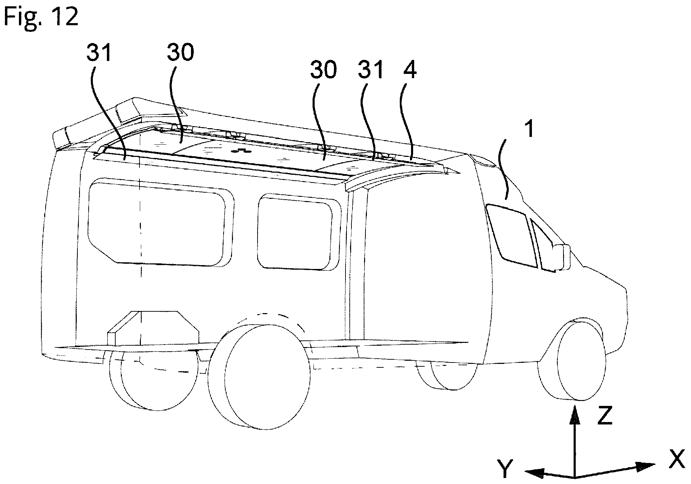

An dem rechten Ende des in Figur 6 dargestellten Profils des Leiterrahmen-Längsträgers 10 ist eine Einstecknut 25 vorgesehen, welche oberseitig eine bogenförmige Ausnehmung 36 aufweist. Die bogenförmige Ausnehmung erstreckt sich nahezu über einen Halbkreis. Die Einstecknut 25 dient zur Aufnahme eines mittleren Dach-Verkleidungselements 30, wie es in den Figuren 7-12 dargestellt ist.

Die Dachverkleidung der Dachverkleidung des in den Figuren gezeigten Ausführungsbeispiels ist, wie in den Figuren 7, 8, 11 und 12 gut erkennbar ist, in Fahrzeugquerrichtung betrachtet, durch ein mittleres großes Dach-Verkleidungselement 30 sowie aus zwei, sich jeweils in Fahrzeugquerrichtung außenseitig anschließenden kleineren Dach-Verkleidungselementen 31.

Dabei können die Dach-Verkleidungselemente 30, 31 sich die Dach-Verkleidungselemente in Fahrzeuglängsrichtung betrachtet entweder jeweils über die gesamte Länge des Transportraums 9 erstrecken, oder es können zwei oder mehrere Dach-Verkleidungselemente 30, 31 vorgesehen sein, die jeweils hintereinander angeordnet sind.

Anhand der Figuren 7 und 8 ist gut erkennbar, dass die Profilnut 24 genutzt werden kann, um eine Verbindung zwischen dem Leiterrahmen-Längsträger 10 und dem Leiterrahmen-Querträger 11 herzustellen, indem ein geeignetes Verbindungsmittel 37 in die Profilnut 24 eingesetzt und festgezogen wird. Diesbezüglich wird insbesondere auf die Verwendung eines Nutensteins 41 mit darin ausgebildetem, nicht dargestelltem Gewinde und Zusammenwirken mit einer Schraube 44 verwiesen.

Aus Figur 8 ist ferner ersichtlich, dass der Reflektortrichter 20 zur Anordnung eines Leuchtmittels 40 vorgesehen ist. Zum Schutz des Leuchtmittels 40 vor Schmutz und Beschädigung ist eine Leuchtmittelabdeckung 32 vorgesehen. Die Leuchtmittelabdeckung 32 weist außenseitig Raststrukturen 45 auf, welche so ausgebildet sind, dass sie mit an dem Leiterrahmen-Längsträger 10 ausgebildeten Leuchtmittelvertiefungen 46 derart zusammenwirken, dass die Leuchtmittelabdeckung 32 durch Verrasten der Raststrukturen 45 in den Leuchtmittelvertiefungen 46 - wie in Figur 8 bis 11 erkennbar - sicher befestigt werden kann (vgl. Figur 6).

In Figur 7 ist ferner zu erkennen, dass die beiden Leiterrahmen-Längsträger 10 parallel zueinander und spiegelsymmetrisch angeordnet sind, so dass sich zwischen den Einstecknuten 25 für das mittlere Dach-Verkleidungselement 30 ein großflächiges Dach-Verkleidungselement 30 erstrecken kann. Das Dach-Verkleidungselement 30 weist eine sich in Fahrzeug-Querrichtung (Y-Richtung) erstreckende Breite von vorzugsweise mehr als 1 m, weiter bevorzugt mindestens 1,5 m auf. Dadurch kann der Zwischenraum zwischen der Dach-Außenhaut 3 und dem Dach-Verkleidungselement 30 großflächig zugänglich gemacht werden, wenn das Dach-Verkleidungselement 30 entfernt wird.

In den Figuren 9 und 10 sind weitere Funktionen dargestellt, welche in Verbindung mit dem Leiterrahmen-Längsträger 10 realisiert werden können.

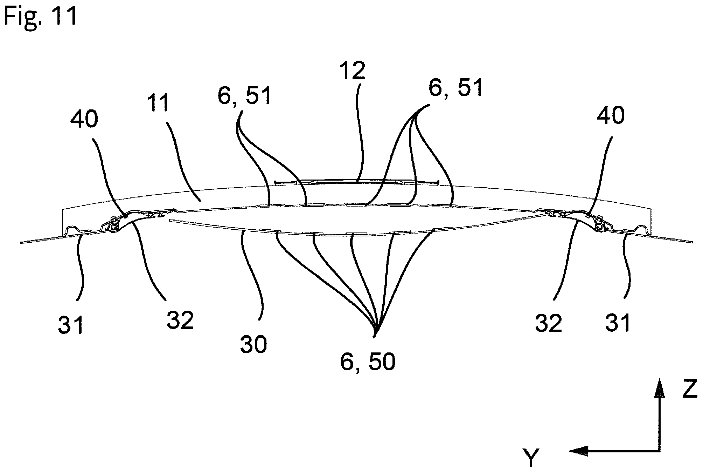

Insbesondere kann in die Profilnut 23 als Verbindungsmittel 37 ein Nutenstein 41 mit daran befestigtem Handgriff 42 eingesetzt werden. Ferner ermöglicht die Gestaltung der Einstecknut 25 in Verbindung mit einem biegeelastischen Dach-Verkleidungselement 30 eine einfache Montage und Demontage des mittleren Dach-Verkleidungselements 30. Dazu muss das mittlere Dach-Verkleidungselement 30 in der gezeigten Ausführungsform lediglich in eine nach unten gebogene Form gebracht werden, wie in den Figuren 10 und 11 gezeigt. Dadurch verkürzt sich die wirksame, sich in Fahrzeug-Querrichtung (Y-Richtung) erstreckende Breite des Dach-Verkleidungselements 30, so dass es in den Bereich zwischen die beiden Leiterrahmen-Längsträger 10 bewegt werden kann. Aufgrund der oberseitig ausgebildeten bogenförmigen Ausnehmung 36 lässt sich das mittlere Dach-Verkleidungselement 30 trotz der relativ großen, sich in Fahrzeug-Querrichtung (Y-Richtung) erstreckenden Breite gut in den in Figur 11 gezeigten bogenförmigen Zustand zur Montage und Demontage verbringen. Das mittlere Dach-Verkleidungselement 30 ist aus einem Material gefertigt, welches aufgrund der Materialeigenschaften nach dem Einsetzen in die Einstecknuten 25 in den ungebogenen Zustand zurückfedert. Um im Fahrbetrieb des Kraftfahrzeugs 1 dennoch einen sicheren Halt des mittleren Dach-Verkleidungselements 30 gegenüber dem Fahrzeugdach 2 zu erzielen, sind oberseitig des Dach-Verkleidungselements 30 als Halteelemente 6 Klettelemente 50 in Form von Streifen vorgesehen, die mit als Halteelemente 6 dienenden Klettelementen 51 zusammenwirken, welche am Leiterrahmen-Querträger 11 befestigt sind.

### Bezugszeichenliste

- 1: Kraftfahrzeug
- 2: Fahrzeugdach
- 3: Dach-Außenhaut
- 4: Dach-Querträger (Spriegel)
- 5: Klebstoff
- 6: Haltemittel
- 7: Schraubverbindung
- 8: Schiebetür
- 9: Transportraum
- 10: Leiterrahmen-Längsträger
- 11: Leiterrahmen-Querträger
- 12: Belüftungselement
- 13: Leiterrahmen
- 14: Mittelabschnitt
- 15: Nachbarabschnitt
- 20: Reflektortrichter
- 21: Einstecknut (Halteprofil für äußeres Dach-Verkleidungselement)
- 22: Einstecknut (Halteprofil für seitliches Verkleidungselement)
- 23: Profilnut
- 24: Profilnut
- 25: Einstecknut (Halteprofil für mittleres Dach-Verkleidungselement)
- 30: Dach-Verkleidungselement (mittleres)
- 31: Dach-Verkleidungselement (äußeres)
- 32: Leuchtmittelabdeckung
- 33: Wand-Verkleidungselement
- 34: nach oben weisende Öffnung
- 35: nach unten weisende Öffnung
- 36: Ausnehmung
- 37: Verbindungsmittel
- 40: Leuchtmittel
- 41: Nutenstein
- 42: Handgriff
- 43: Abdeckleiste
- 44: Schraube
- 45: Raststrukturen
- 46: Leuchtmittelvertiefung
- 50: Klettelement
- 51: Klettelement

- X: Fahrzeug-Längsrichtung (X-Richtung)
- Y: Fahrzeug-Querrichtung (Y-Richtung)
- Z: Fahrzeug-Hochrichtung (Z-Richtung)

## Patentansprüche

1. Kraftfahrzeug-Dachkonstruktion eines Nutzfahrzeugs in Form eines Kastenwagens mit mehreren Dach-Querträgern (4) und einer diese Dach-Querträger (4) unterseitig abdeckenden Dachverkleidung mit mindestens einem Dach-Verkleidungselement (30, 31),
**dadurch gekennzeichnet,**
**dass** ein Leiterrahmen (13) aus mindestens zwei Leiterrahmen-Längsträgern (10) und mindestens zwei Leiterrahmen-Querträgern (11) gebildet ist, wobei der Leiterrahmen an den Dach-Querträgern (4) befestigt ist und wobei das mindestens eine Dach-Verkleidungselement (30, 31) lösbar an dem Leiterrahmen (13) befestigt ist und wobei mindestens ein Dach-Querträger (4) innenseitig einer Dach-Außenhaut (3) angeordnet ist und mindestens einer der Leiterrahmen-Querträger (11) komplementär zu mindestens einem der mindestens zwei Dach-Querträger (4) ausgebildet ist.

2. Kraftfahrzeug-Dachkonstruktion nach dem vorstehenden Anspruch, **dadurch gekennzeichnet, dass** an mindestens einem der Leiterrahmen-Längsträger (10) und/oder mindestens einem der Leiterrahmen-Querträger (11) ein Haltemittel (6) für das mindestens eine lösbar befestigte Dach-Verkleidungselement (30, 31) angeordnet oder ausgebildet ist.

3. Kraftfahrzeug-Dachkonstruktion nach dem vorstehenden Anspruch, **dadurch gekennzeichnet, dass** als Haltemittel (6) an zwei gegenüberliegenden Leiterrahmen-Längsträgern (10) und/oder an zwei gegenüberliegenden Leiterrahmen-Querträgern (11) eine Einstecknut (21, 25) zum Einstecken eines komplementär ausgebildeten Dach-Verkleidungselements (30, 31) ausgebildet oder angeordnet sind.

4. Kraftfahrzeug-Dachkonstruktion nach dem vorstehenden Anspruch, **dadurch gekennzeichnet, dass** zwei Einstecknuten (21, 25) an sich gegenüberliegenden Seiten von zwei der Leiterrahmen-Längsträger (10) oder zwei der Leiterrahmen-Querträger (11) ausgebildet sind und in diesen Einstecknuten (21, 25) sich gegenüberliegende Stoßkanten eines biegeelastisch ausgebildeten Dach-Verkleidungselementes (30, 31) aufgenommen sind.

5. Kraftfahrzeug-Dachkonstruktion nach einem der vorstehenden Ansprüche, **dadurch gekennzeichnet, dass** sich das mindestens eine Dach-Verkleidungselement (30, 31) über einen Großteil der Länge und/oder über einen Großteil der Breite des Leiterrahmens (13) erstreckt.

6. Kraftfahrzeug-Dachkonstruktion nach einem der vorstehenden Ansprüche, **dadurch gekennzeichnet, dass** an dem mindestens einen Dach-Verkleidungselement (30, 31) mindestens ein Haltemittel (6) angeordnet ist, das in Endmontagelage mit einem an einem Dach-Querträger (4) und/oder an einem Leiterrahmen-Querträger (11) und/oder an einem Leiterrahmen-Längsträger (10) befestigten, komplementär dazu ausgebildeten Haltemittel (6) zusammenwirkend angeordnet ist.

7. Kraftfahrzeug-Dachkonstruktion nach einem der vorstehenden Ansprüche, **dadurch gekennzeichnet, dass** mindestens einer der Leiterrahmen-Querträger (11) mittels eines mechanischen Verbindungsmittels (37) mit mindestens einem der Dach-Querträger (4) verbunden ist.

8. Kraftfahrzeug-Dachkonstruktion nach einem der vorstehenden Ansprüche, **dadurch gekennzeichnet, dass** mindestens einer der Dach-Querträger (4) eine polygonförmige, runde oder bogenförmige Querschnittsform aufweist und/oder einen polygonförmigen, kreisförmigen oder halbkreisförmigen Hohlraum aufweist.

9. Kraftfahrzeug-Dachkonstruktion nach einem der vorstehenden Ansprüche, **dadurch gekennzeichnet, dass** in dem Dach-Querträger (4) und/oder in dem Leiterrahmen-Querträger (11) miteinander fluchtende Öffnungen (34, 35) zur Anordnung von Haltemitteln (6) ausgebildet sind.

10. Kraftfahrzeug-Dachkonstruktion nach einem der vorstehenden Ansprüche, **dadurch gekennzeichnet, dass** mindestens einer der Leiterrahmen-Längsträger (10) als Profilstruktur ausgebildet und fest mit den mindestens zwei Leiterrahmen-Querträgern (11) verbunden ist.

11. Kraftfahrzeug-Dachkonstruktion nach einem der vorstehenden Ansprüche, **dadurch gekennzeichnet, dass** mindestens einer der Leiterrahmen-Längsträger (10) mindestens eine Profilnut (23, 24) zum Zusammenwirken mit einem Nutenstein (41), mindestens eine Leuchtmittel-Vertiefung (46) und/oder mindestens ein Leuchtmittelabdeckungs-Befestigungselement (32) aufweist.

12. Kraftfahrzeug-Dachkonstruktion nach einem der vorstehenden Ansprüche, **dadurch gekennzeichnet, dass** mindestens einer der Leiterrahmen-Längsträger (10) als Haltemittel (6) eine Einstecknut (25) mit bogenförmiger Ausnehmung zur Aufnahme eines mittleren Dach-Verkleidungselements (30) aufweist.

13. Montageverfahren zur lösbaren Befestigung eines Dach-Verkleidungselements an einer Kraftfahrzeug-Dachkonstruktion nach einem der Ansprüche 1 bis 12, **dadurch gekennzeichnet, dass** das Dach-Verkleidungselement (30, 31) in den Bereich zwischen zwei an den mindestens zwei Längsträgern (10) ausgebildete Einstecknuten (21, 25) gebracht und anschließend durch Relativbewegung zwischen Dach-Verkleidungselement (30, 31) und Längsträgern (10) in einer Endmontagelage fixiert wird.

14. Montageverfahren nach dem vorstehenden Anspruch, **dadurch gekennzeichnet, dass** das Dach-Verkleidungselement (30, 31) während der Montage derart biegeelastisch verformt wird, dass es bei starr zueinander fixierten Längsträgern (10) in den Bereich zwischen diese verbracht und in dieser Position durch Rückverformung in die Einstecknuten (21, 25) eintauchen und mit Hilfe der Einstecknuten (21, 25) relativ gegenüber diesen fixiert werden kann.

## Claims

1. A vehicle roof construction of a commercial vehicle in the form of a box van with several roof cross-beams (4) and a roof lining covering these roof cross-beams (4) on the underside with at least one roof lining element (30, 31),
**characterised in that**
a ladder frame (13) is formed from at least two ladder frame side members (10) and at least two ladder frame cross members (11), wherein the ladder frame is attached to the roof cross-beams (4) and wherein the at least one roof lining element (30, 31) is releasably attached to the ladder frame (13) and wherein at least one roof cross-beam (4) is arranged on the inside of a outer roof skin (3) and at least one of the ladder frame cross members (11) is configured to be complementary to at least one of the at least two roof cross-beams (4).

2. The vehicle roof construction according to the preceding claim, **characterised in that** a retaining means (6) for the at least one releasably attached roof lining element (30, 31) is arranged or configured at at least one of the ladder frame side members (10) and/or at least one of the ladder frame cross members (11).

3. The vehicle roof construction according to the preceding claim, **characterised in that** an insertion groove (21, 25) for inserting a complementarily configured roof lining element (30, 31) is arranged or configured as retaining means (6) at two opposite ladder frame side members (10) and/or at two opposite ladder frame cross members (11).

4. The vehicle roof construction according to the preceding claim, **characterised in that** two insertion grooves (21, 25) are configured at opposite sides of two of the ladder frame side members (10) or two of the ladder frame cross members (11) and opposite abutting edges of a roof lining element (30, 31) configured to be flexurally elastic are received in these insertion grooves (21, 25).

5. The vehicle roof construction according to any one of the preceding claims, **characterised in that** the at least one roof lining element (30, 31) extends along a majority of the length and/or along a majority of the width of the ladder frame (13).

6. The vehicle roof construction according to any one of the preceding claims, **characterised in that** at least one retaining means (6) arranged to cooperate with a retaining element (6) configured to be complementary thereto and connected to a roof cross-beam (4) and/or a ladder frame cross member (11) and/or a ladder frame side member (10) in the final assembled position is arranged at the at least one roof lining element (30, 31).

7. The vehicle roof construction according to any one of the preceding claims, **characterised in that** at least one of the ladder frame cross members (11) is connected to at least one of the roof cross-beams (4) by a mechanical connecting means (37).

8. The vehicle roof construction according to any one of the preceding claims, **characterised in that** at least one of the roof cross-beams (4) has a polygon-shaped, round or curved cross-sectional shape and/or has a polygon-shaped, circular or arcuate cavity.

9. The vehicle roof construction according to any one of the preceding claims, **characterised in that** mutually aligned openings (34, 35) for arranging retaining elements (6) are provided in the roof cross-beam (4) and/or the ladder frame cross member (11).

10. The vehicle roof construction according to any one of the preceding claims, **characterised in that** at least one of the ladder frame side members (10) is configured as a profile structure and firmly connected to the at least two roof cross-beams (11).

11. The vehicle roof construction according to any one of the preceding claims, **characterised in that** at least one of the ladder frame side members (10) comprises at least one profile groove (23, 24) for cooperating with a sliding block (41), at least one lamp recess (46) and/or at least one lamp cover fastening element (32).

12. The vehicle roof construction according to any one of the preceding claims, **characterised in that** at least one of the ladder frame side members (10) comprises an insertion groove (25) with a curved recess as a retaining means (6) for receiving a central roof lining element (30).

13. A method of assembly for the releasable attachment of a roof lining element to a vehicle roof construction according to any one of claims 1 to 12, **characterised in that** the roof lining element (30, 31) is moved to the region between two insertion grooves (21, 25) provided at the at least two side members (10) and subsequently fixed in a final assembled position by a relative movement between the roof lining element (30, 31) and side members (10).

14. The method of assembly according to the preceding claim, **characterised in that** the roof lining element (30, 31) is deformed in a flexurally elastic manner during assembly such that, with side members (10) rigidly fixed with respect to each other, it can be transferred to the region between them and inserted in this position into the insertion grooves (21, 25) by recovery and relatively fixed with respect to them by the insertion grooves (21, 25).

## Revendications

1. Architecture de toit de véhicule automobile d'un véhicule utilitaire sous forme de fourgon comprenant plusieurs traverses de toit (4) et un habillage de toit couvrant en sous-face lesdites traverses de toit (4) et comprenant au moins un élément d'habillage de toit (30, 31),
**caractérisée en ce que**
un cadre en échelle (13) est formé d'au moins deux longerons de cadre en échelle (10) et d'au moins deux traverses de cadre en échelle (11), le cadre en échelle étant fixé aux traverses de toit (4) et le au moins un élément d'habillage de toit (30, 31) étant fixé de manière amovible au cadre en échelle (13) et au moins une traverse de toit (4) étant agencée du côté intérieur d'une enveloppe extérieure de toit (3) et au moins une des traverses de cadre en échelle (11) étant réalisée de manière complémentaire à au moins une des au moins deux traverses de toit (4).

2. Architecture de toit de véhicule automobile selon la revendication précédente, **caractérisée en ce qu'**un moyen de retenue (6) destiné à l'au moins un élément d'habillage de toit (30, 31) fixé de manière amovible est agencé ou réalisé au niveau d'au moins un des longerons de cadre en échelle (10) et/ou d'au moins une des traverses de cadre en échelle (11).

3. Architecture de toit de véhicule automobile selon la revendication précédente, **caractérisée en ce qu'**une rainure d'insertion (21, 25) permettant l'insertion d'un élément d'habillage de toit (30, 31) réalisé de manière complémentaire est réalisée ou agencée en tant que moyen de retenue (6) au niveau de deux longerons de cadre en échelle (10) se faisant face et/ou au niveau de deux traverses de cadre en échelle (11) se faisant face.

4. Architecture de toit de véhicule automobile selon la revendication précédente, **caractérisée en ce que** deux rainures d'insertion (21, 25) sont réalisées au niveau de côtés opposés de deux des longerons de cadre en échelle (10) ou de deux des traverses de cadre en échelle (11) et des bords de jonction opposés d'un élément d'habillage de toit (30, 31) élastique en flexion sont accueillis dans lesdites rainures d'insertion (21, 25)

5. Architecture de toit de véhicule automobile selon l'une quelconque des revendications précédentes, **caractérisée en ce que** le au moins un élément d'habillage de toit (30, 31) s'étend sur une grande partie de la longueur et/ou sur une grande partie de la largeur du cadre en échelle (13).

6. Architecture de toit de véhicule automobile selon l'une quelconque des revendications précédentes, **caractérisée en ce qu'**au niveau de l'au moins un élément d'habillage de toit (30, 31) est agencé au moins un moyen de retenue (6) qui, en position de montage final, est agencé de manière à coopérer avec un moyen de retenue (6) qui est réalisé de manière complémentaire audit au moins un moyen de retenue et qui est fixé à une traverse de toit (4) et/ou à une traverse de cadre en échelle (11) et/ou à un longeron de cadre en échelle (10).

7. Architecture de toit de véhicule automobile selon l'une quelconque des revendications précédentes, **caractérisée en ce qu'**au moins une des traverses de cadre en échelle (11) est reliée à au moins une des traverses de toit (4) grâce à un moyen de liaison mécanique (37).

8. Architecture de toit de véhicule automobile selon l'une quelconque des revendications précédentes, **caractérisée en ce qu'**au moins une des traverses de toit (4) présente une forme de section transversale polygonale, ronde ou arquée et/ou présente une cavité de forme polygonale, circulaire ou semi-circulaire.

9. Architecture de toit de véhicule automobile selon l'une quelconque des revendications précédentes, **caractérisée en ce que** des orifices (34, 35) alignés les uns avec les autres et permettant l'agencement de moyens de retenue (6) sont réalisés dans la traverse de toit (4) et/ou dans la traverse de cadre en échelle (11).

10. Architecture de toit de véhicule automobile selon l'une quelconque des revendications précédentes, **caractérisée en ce qu'**au moins un des longerons de cadre en échelle (10) est réalisé sous forme de structure profilée et est relié de manière fixe aux au moins deux traverses de cadre en échelle (11).

11. Architecture de toit de véhicule automobile selon l'une quelconque des revendications précédentes, **caractérisée en ce qu'**au moins un des longerons de cadre en échelle (10) présente au moins une rainure profilée (23, 24) destinée à coopérer avec un coulisseau de rainure (41), au moins un évidement pour moyen d'éclairage (46) et/ou au moins un élément de fixation de calotte de moyen d'éclairage (32).

12. Architecture de toit de véhicule automobile selon l'une quelconque des revendications précédentes, **caractérisée en ce qu'**au moins un des longerons de cadre en échelle (10) présente en tant que moyen de retenue (6) une rainure d'insertion (25) munie d'un évidement en forme d'arc permettant l'accueil d'un élément d'habillage de toit (30) central.

13. Procédé de montage permettant de fixer de manière amovible un élément d'habillage de toit sur une architecture de toit de véhicule automobile selon l'une quelconque des revendications 1 à 12, **caractérisé en ce que** l'élément d'habillage de toit (30, 31) est amené dans la région située entre deux rainures d'insertion (21, 25) réalisées au niveau des au moins deux longerons (10) et est ensuite immobilisé dans une position de montage final grâce à un mouvement relatif entre l'élément d'habillage de toit (30, 31) et les longerons (10).

14. Procédé de montage selon la revendication précédente, **caractérisé en ce que** l'élément d'habillage de toit (30, 31) est déformé de manière élastique en flexion pendant le montage de telle manière qu'il s'établit dans la région située entre les longerons (10) lorsque lesdits longerons sont immobilisés de manière rigide les uns par rapport aux autres et, dans cette position, peut plonger dans les rainures d'insertion (21, 25) et être immobilisé par rapport aux rainures d'insertion (21, 25) à l'aide desdites rainures d'insertion par retour de déformation.
